# EUROPÄISCHE PATENTSCHRIFT

(11) **EP 1 521 675 B1**
(45) Veröffentlichungstag und Bekanntmachung des Hinweises auf die Patenterteilung: **25.07.2007**
(21) Anmeldenummer: 03763906.9
(22) Anmeldetag: 09.07.2003
(51) Int. Cl.: B32B 27/32, F02M 35/12, F16L 55/033, F16L 9/21

(54) **SCHALLDÄMMENDER HOHLKÖRPER ZUR LUFTFÜHRUNG**
SOUND-ABSORBING HOLLOW BODY FOR AN AIR SUPPLY
CORPS CREUX INSONORISANT POUR L'AMENEE D'AIR

(30) Priorität: 10.07.2002 DE 10231048
(43) Veröffentlichungstag der Anmeldung: 13.04.2005
(73) Patentinhaber: Trocellen GmbH, 53840 Troisdorf (DE)
(72) Erfinder: BREITSCHEIDEL, Ulrich, 53721 Siegburg (DE); ULB, Horst, 53844 Troisdorf (DE)
(74) Vertreter: HT-Patentabteilung
(86) Internationale Anmeldenummer: PCT/EP2003/050299
(87) Internationale Veröffentlichungsnummer: WO 2004/007108

(56) Entgegenhaltungen:
- DE-A- 19 807 411
- DE-U- 29 711 763
- FR-A- 2 214 723
- FR-A- 2 744 510

## Beschreibung

Die Erfindung betrifft einen schalldämmenden Hohlkörper zur Luftführung, beispielsweise in Fahrzeugen, Gebäuden, für Maschinen oder dergleichen. Solche schalldämmenden Hohlkörper dienen z. B. zur Lufterneuerung oder Temperaturveränderung. Insbesondere bezieht sich die Erfindung auf Luftführungen zu den Ausströmöffnungen in einem Kraftfahrzeug.

### Technisches Gebiet

Hohlkörper zur Luftführung in Kraftfahrzeugen werden heute noch überwiegend aus kompaktem thermoplastischen Kunststoff im Spritzgussverfahren oder durch Blasformtechnik hergestellt. Ein Nachteil dieser bekannten Luftführungen ist, dass der Luftschall der durchströmenden Luft teilweise die Wandungen durchdringt und als Körperschall von den Außenflächen abgestrahlt wird. Dieser Luftschall wird besonders bei höheren Luftgeschwindigkeiten als störend empfunden.

### Stand der Technik

Aus der EP 0 095 582 B1 ist ein schallgedämpfter Strömungskanal bekannt, bei dem die Wände aus einem Verbund eines elastischen, thermoplastischen, überwiegend geschlossenzelligen Schaumstoff als äußere Schicht und einem offenzelligen elastischen Weichschaumstoff als innerer Schicht gebildet sind. Bei dieser Art von Stömungskanälen besteht die Gefahr, dass sich die offenen Zellen der inneren Schicht mit Schmutz, Staub, Wasser oder Öl zusetzen.

In der EP 0 445 592 B1 wird ein Verfahren zum Herstellen eines Hohlkörpers aus einem bleibend verformbaren Schaumstoff durch Blasformen beschrieben. Nach diesem Verfahren werden zunächst ein oder mehrere Abschnitte eines Schaumstoffs nach Erwärmung auf eine Temperatur oberhalb der Erweichungstemperatur des Schaumstoffs in eine mehrteilige Form eingelegt. Durch Schließen der mehrteiligen Form werden die Abschnitte entlang ihrer Kanten miteinander verbunden, bevorzugt verschweißt, wobei der Zwischenraum zwischen den Abschnitten wenigstens weitgehend abgedichtet wird. Durch Einführen eines unter Druck stehenden Fluids, insbesondere Druckluft, in den Zwischenraum zwischen den Abschnitten werden die Abschnitte an die Wandungen der mehrteiligen Form gedrückt und ausgeformt. Nach Abkühlen der Abschnitte wird das Formteil, z. B. ein Hohlkörper zur Luftführung, entformt. Durch Verwendung von geschlossenzelligem Schaumstoff ist die schalldämmende Wirkung dieser Hohlkörper jedoch relativ gering.

DE 44 29045 offenbart einen schalldämmenden Hohlkörper mit einer inneren Schicht aus geschlossenzelligem Polyolefinschaum und einer ausseren aus Fasern bestehenden Schicht.

### Aufgabe

Aufgabe der vorliegenden Erfindung ist es, einen schalldämmenden Hohlkörper zur Luftführung zur Verfügung zu stellen, der diese Nachteile nicht aufweist. Ein weiteres Anliegen der Erfindung ist es, ein einfaches und kostengünstiges Verfahren zur Herstellung eines solchen schalldämmenden Hohlkörpers zur Verfügung zu stellen.

### Darstellung der Erfindung

Zur Lösung dieser Aufgabe wird ein schalldämmender Hohlkörper zur Luftführung mit einer ersten, äußeren Schicht aus geschlossenzelligem Polyolefinschaumstoff, einer zweiten, inneren Schicht aus geschlossenzelligem Polyolefinschaumstoff und wenigstens einer weiteren, zwischen der inneren und der äußeren Schicht angeordneten Schicht aus einem aus Fasern bestehenden Flächengebilde, insbesondere einem Vliesmaterial, vorgeschlagen.

Die innere und die äußere Schicht bestehen bevorzugt aus vernetztem Polyethylenschaumstoff einer Rohdichte von 25 bis 150 kg/m³, bevorzugt 25 - 70 kg/m³. Als Polyethylenschaumstoff wird ein solcher Schaumstoff verstanden, der wenigstens überwiegend auf der Basis von Polyethylen als Polymer aufgebaut ist. Neben Polyethylen als Polymer können Beimischungen aus Polypropylen, EVA oder anderen, dem Fachmann bekannten Beimischungen verwendet werden, um die Härte des Schaumstoffs sowie dessen Wärmeformbeständigkeit zu beeinflussen. Polyethylenschaumstoff mit einer Rohdichte unterhalb von 25 kg/m³ weist für den erfindungsgemäßen Zweck eine zu geringe Steifigkeit auf, während Rohdichten über 150 kg/m³ einerseits zu höheren Herstellkosten führen und andererseits die Schalldämpfungswerte negativ becinflussen. Die äußere Schicht und die innere Schicht aus geschlossenzelligem Polyolefinschaumstoff können jeweils die gleiche Rohdichte aufweisen, bevorzugt wird jedoch die äußere Schicht aus einem Polyolefinschaumstoff höherer Rohdichte hergestellt.

Erfindungsgemäß wird zwischen der inneren und der äußeren Schicht aus geschlossenzelligem Polyolefinschaumstoff eine Schicht aus einem aus Fasern bestehenden Flächengebilde, insbesondere einem Vliesmaterial, angeordnet. Diese mittlere Schicht ist für die eigentliche Schalldämmung in wesentlichem Maße verantwortlich. Bevorzugt wird ein Vliesmaterial eingesetzt mit einem Flächengewicht von 100 bis 400 g/m². Das Vliesmaterial besteht bevorzugt überwiegend aus Polypropylen-Fasern, es können jedoch auch andere thermoplastische Fasern, Naturfasern, Kunstfaser-Naturfaser-Gemische oder auch Mineralfasern eingesetzt werden.

Ein wesentlicher Aspekt der vorliegenden Erfindung besteht darin, dass sowohl die innere als auch die äußere Schicht des schalldämmenden Hohlkörpers, also die von außen sichtbare Oberfläche sowie die eigentliche Luftführungs-Oberfläche des Hohlkörpers, aus geschlossenzelligem Polyolefinschaumstoff bestehen. Im Gegensatz zu offenporigen Schaumstoffen besteht bei geschlossenzelligem Polyolefinschaumstoff eine erheblich geringere Verschmutzungsgefahr, zudem ist ein Aufsaugen von Wasser, Öl oder dergleichen nicht zu befürchten. Dennoch weist der erfindungsgemäße schalldämmende Hohlkörper eine ausgesprochen gute Dämpfung sowohl des Eigenschwingverhaltens als auch bzgl. der durch turbulente Luftströmungen entstehenden Schallanteile auf.

Unter "geschlossenzellig" im Sinne dieser Erfindung wird ein Schaumstoff verstanden, dessen Zellen zu mehr als 60 % vollständig geschlossen sind. Unter offenzellig im Sinne dieser Erfindung wird ein Schaumstoff verstanden, dessen Zellen zu mehr als 60 % geöffnet sind, deren Zellwand somit eine gasdurchlässige Öffnung aufweist. Bevorzugt sind bei dem eingesetzten geschlossenzelligem Polyolefinschaumstoff mehr als 80 % der Zellen geschlossen, insbesondere mehr als 90 %.

Die erfindungsgemäß verwendeten Materialien lassen sich äußerst kostengünstig durch Kaschieren unter Einwirkung von Wärme und Druck, insbesondere durch Flammkaschieren, miteinander verbinden. Besonders bevorzugt wird hierzu in einem ersten Schritt ein dreischichtiges Flächengebilde, bestehend aus der äußeren Schicht aus Polyolefinschaumstoff, der mittleren Schicht aus dem Vliesmaterial und der inneren Schicht aus einem geschlossenzelligen Polyolefinschaumstoff hergestellt. In einem zweiten Verarbeitungsschritt wird aus diesem dreischichtigem Flächengebilde der erfindungsgemäße schalldämmende Hohlkörper hergestellt, beispielsweise im Hohlkörper-Blasformverfahren, insbesondere entsprechend der EP 0 445 592 B1. Die Weiterverarbeitung nach diesem Verfahren ist dadurch möglich, dass der eingesetzte Polyolefinschaumstoff geschlossenzellig und damit Luftundurchlässig ist.

### Bester Weg zur Ausführung der Erfindung und Vergleichsbeispiel

Zur Herstellung eines erfindungsgemäßen schalldämmenden Hohlkörpers zur Luftführung wird ein vernetzter geschlossenzelliger Polyethylenschaumstoff einer Dicke von 3 mm mit einer Rohdichte von 60 kg/m³ (Typ TROCELLEN 6003 N, Hersteller: TROCELLEN GmbH) mit einem Polypropylen-Nadelvlies einer Dicke von 2 mm und einem Flächengewicht von 200 g/m² durch Flammkaschieren verbunden. Hierzu wird der Polyethylen-Schaumstoff von einer Rolle abgerollt, einseitig mit offener Gasflamme bis in den thermoplastischen Bereich erwärmt und unmittelbar anschließend mit dem ebenfalls von einer Rolle abgewickelten Polypropylen-Nadelvlies im Walzenspalt kaschiert. Das Nadelvlies-Material schmilzt dabei nicht auf, sondern wird lediglich in die erwärmte Oberfläche des Polyethylen-Schaumstoffs eingedrückt und mechanisch in diesem verankert. Auf gleiche Weise wird anschließend die zweite Polyethylen-Schaumstoffschicht, ebenfalls 3 mm dick, jedoch mit einer Rohdichte von 30 kg/m³, aufkaschiert. Aus diesem 3-schichtigen Verbundmaterial als Zwischenprodukt werden anschließend durch Wasserstrahlschneiden ebene Abschnitte ausgeschnitten, die paarweise nach dem Verfahren gemäß der EP 0 445 592 B1, auf die hiermit vollinhaltlich Bezug genommen wird, im Blasformverfahren zu dem gewünschten Hohlkörper geformt.

### Vergleichsversuch

Zum Vergleich der schalldämmenden Wirkung wurde ein geometrisch gleich gestaltetes Luftführungsteil mit einschichtigem Aufbau aus vernetztem, geschlossenzelligem Polyethylenschaumstoff einer Dicke von 3 mm und einer Rohdichte von 100 kg/m³ im Blasformverfahren gemäß der EP 0 445 592 B1 hergestellt. Bei 2000 Hz wies der erfindungsgemäße 3-schichtige Aufbau einen um 6 dB niedrigeren Schallpegel auf.

Die erfindungsgemäßen schalldämmenden Hohlkörper zur Luftführung weisen sowohl eine überlegene Durchtrittsdämpfung des Schalls als auch eine hohe Dämpfung für denjenigen Schall auf, der im Lufteintrittsbereich des Hohlkörpers durch z. B. einen Ventilator oder dergleichen eingebracht wird. Schließlich wird auch das Eigenschwingen des schalldämmenden Hohlkörpers zuverlässig reduziert. Als weiterer Vorteil ergibt sich die Verringerung von Klappergeräuschen oder dergleichen, insbesondere Geräuschen, die durch schwingende Berührung des schalldämmenden Hohlkörpers mit anderen Kraftfahrzeugteilen entstehen können.

## Patentansprüche

1. Schalldämmender Hohlkörper zur Luftführung mit einer ersten, äußeren Schicht aus geschlossenzelligem Polyolefinschaumstoff, einer zweiten inneren Schicht aus geschlossenzelligem Polyolefinschaumstoff und wenigstens einer weiteren, zwischen der inneren und der äußeren Schicht angeordneten Schicht aus einem aus Fasern bestehenden Flächengebilde.

2. Schalldämmender Hohlkörper nach Anspruch 1, **dadurch gekennzeichnet, dass** das aus Fasern bestehenden Flächengebilde ein Vliesmaterial ist.

3. Schalldämmender Hohlkörper nach Anspruch 1 oder 2, **dadurch gekennzeichnet, dass** die innere und die äußere Schicht aus einem vernetztem Polyethylenschaumstoff einer Rohdichte von 25 bis 100 kg/m³, bevorzugt 25 bis 70 kg/m³ bestehen.

4. Schalldämmender Hohlkörper nach einem der Ansprüche 1 bis 3, **dadurch gekennzeichnet, dass** die Schicht aus einem Vliesmaterial überwiegend aus Polypropylen-Fasern besteht und ein Flächengewicht von 100 bis 400 g/m² aufweist.

5. Verfahren zur Herstellung eines schalldämmenden Hohlkörpers nach einem der Ansprüche 1 bis 4, **dadurch gekennzeichnet, dass** zunächst ein wenigstens dreischichtiges Flächengebilde, umfassend eine erste Schicht aus geschlossenzelligem Polyolefinschaumstoff, eine zweite Schicht aus geschlossenzelligem Polyolefinschaumstoff und wenigstens eine weiteren, zwischen der inneren und der äußeren Schicht angeordneten Schicht aus einem Vliesmaterial durch Kaschieren unter Anwendung von Wärme und Druck hergestellt wird und dieses Flächengebilde anschließend zu dem schalldämmenden Hohlkörper geformt wird.

## Claims

1. Sound-insulating hollow article for air ducting, comprising a first, outer layer of closed-cell polyolefin foam, a second, inner layer of closed-cell polyolefin foam and at least one further layer, this further layer being disposed between the inner and outer layers and consisting of a fibrous sheet material.

2. Sound-insulating hollow article according to Claim 1, **characterized in that** the fibrous sheet material is a nonwoven web material.

3. Sound-insulating hollow article according to Claim 1 or 2, **characterized in that** the inner and outer layers consist of a crosslinked foam of polyethylene, the foam having an envelope density in the range from 25 to 100 kg/m³ and preferably in the range from 25 to 70 kg/m³.

4. Sound-insulating hollow article according to any one of the Claims 1 to 3, **characterized in that** the layer consists of a nonwoven web material predominantly of polypropylene fibres and has a basis weight in the range from 100 to 400 g/m².

5. Process for producing a sound-insulating hollow article according to any one of the Claims 1 to 4, **characterized in that**, first, an at least three-layered sheet material comprising a first layer of closed-cell polyolefin foam, a second layer of closed-cell polyolefin foam and at least one further layer, this layer being disposed between the inner and the outer layers and consisting of a nonwoven web material, is produced by laminating under heat and pressure and then this sheet material is subsequently formed into the sound-insulating hollow article.

## Revendications

1. Corps creux insonorisant pour l'amenée d'air, comportant une première couche extérieure en mousse de polyoléfine à alvéoles fermées, une deuxième couche intérieure en mousse de polyoléfine à alvéoles fermées et au moins une autre couche, placée entre les couches intérieure et extérieure, constituée d'une structure en nappe constituée de fibres.

2. Corps creux insonorisant suivant la revendication 1, **caractérisé en ce que** la structure en nappe constituée de fibres est un non tissé.

3. Corps creux insonorisant suivant la revendication 1 ou 2, **caractérisé en ce que** la couche intérieure et la couche extérieure consistent en une mousse de polyéthylène réticulé d'une masse volumique apparente de 25 à 100 kg/m³ , de préférence de 25 à 70 kg/m³.

4. Corps creux insonorisant suivant l'une quelconque des revendications 1 à 3, **caractérisé en ce que** la couche constituée d'un non tissé consiste essentiellement en fibres de polypropylène et présente un poids surfacique de 100 à 400 g/m².

5. Procédé de production d'un corps creux insonorisant suivant l'une quelconque des revendications 1 à 4, **caractérisé en ce que** l'on produit d'abord une structure en nappe à au moins trois couches, comprenant une première couche de mousse de polyoléfine à alvéoles fermées, une deuxième couche de mousse de polyoléfine à alvéoles fermées et au moins une autre couche, placée entre les couches intérieure et extérieure et composée d'un matériau non tissé, par placage avec application de chaleur et de pression, et que cette structure en nappe est ensuite façonnée pour donner le corps creux insonorisant.
